# EUROPÄISCHE PATENTSCHRIFT

(11) **EP 0 387 773 B1**
(45) Veröffentlichungstag und Bekanntmachung des Hinweises auf die Patenterteilung: **02.02.1994**
(21) Anmeldenummer: 90104697.9
(22) Anmeldetag: 13.03.1990
(51) Int. Cl.: B60N 3/14

(54) **Automatisch montierbarer und beleuchteter elektrischer Zigarrenanzünder**
Automatically fittable and illuminated electrical cigar lighter
Allume-cigares électrique éclairé, pouvant être installé automatiquement

(30) Priorität: 16.03.1989 DE 3908617
(43) Veröffentlichungstag der Anmeldung: 19.09.1990
(73) Patentinhaber: SCHOELLER & CO. Elektrotechnische Fabrik GmbH & Co., D-60559 Frankfurt (DE)
(72) Erfinder: Von Gaisberg, Alexander, D-7141 Beilstein (DE); Ante, Günther, D-6000 Frankfurt (DE)

(56) Entgegenhaltungen:
- EP-A- 0 200 247
- DE-U- 8 903 941
- FR-A- 2 371 641
- FR-A- 2 436 940
- GB-A- 2 089 012
- GB-A- 2 149 896

## Beschreibung

Die Erfindung betrifft einen elektrischen Zigarrenanzünder nach dem Oberbegriff des Anspruchs 1.

Wirtschaftliche Montageautomatisierung stellt ein wesentliches Rationalisierungspotential der Zukunft dar, insbesondere unter dem zunehmendem Wettbewerbsdruck, alle Rationalisierungsreserven der Fertigungstechnik auszuschöpfen.

Aus der DE-PS 25 35 080 ist ein insbesondere in das Armaturenbrett eines Kraftfahrzeugs zu installierender elektrischer Zigarrenanzünder bekannt, dessen Beleuchtungseinrichtung im wesentlichen aus einer Lampe, einem Lampengehäuse und einem zwischen dem Armaturenbrett und der Zigarrenanzünder-Steckdose angeordneten Leuchtring besteht.

Diese im Stand der Technik bekannte Beleuchtungseinrichtung ist unter dem Gesichtspunkt einer montagegerechten Produktgestaltung noch verbesserungswürdig, wobei letztere Voraussetzung einer wirtschaftlichen Montageautomatisierung ist. So ist es bspw. nachteilig, Lampe und Lampengehäuse exzentrisch außerhalb des durch den Leuchtringdurchmesser vorgegebenen Raumbereichs anzuordnen. Aus diesem Grunde gestattet die bekannte Beleuchtungseinrichtung beim Einsetzen in die Installationsöffnung des Armaturenbretts keine lineare Fügebewegung. Statt dessen ist eine gekrümmte Einbaubewegung erforderlich, was dem Einsatz von Montagerobotern entgegensteht. Auch ist nachteilig, daß die Beleuchtungseinrichtung nicht gemeinsam mit der Steckdose im Zulieferwerk vormontiert werden kann, wodurch im Automobilwerk drei einzelne Montageschritte erforderlich werden. So muß nach dem Einsetzen des Leuchtrings die Steckdose in dessen Öffnung versenkt werden, wobei der Leuchtring solange festzuhalten ist, bis die im Leuchtring ausgebildeten Klemmzungen von der eingeschobenen Steckdose zum Zwecke der Verrastung im Armaturenbrett aufgespreizt sind. Diese Klemmzungen verschlechtern ferner auch die gleichmäßige Lichtverteilung im Leuchtring. Hierbei ist zusätzlich auf die richtige gegenseitige Positionierung von Leuchtring und Steckdose zu achten. Zu diesem Zweck sind Richtzungen im Leuchtring erforderlich, die beim Einsetzen der Steckdose wegbrechen. In einem dritten Montageschritt muß schließlich noch ein im rückwärtigen Teil des Armaturenbretts befindlicher Gegenstecker für die Stromversorgung der Lampe und des Zigarrenanzünder-Heizelements angeschlossen werden. Ferner weist die im Stand der Technik bekannte Beleuchtungseinrichtung auch noch relativ viele Einzelteile auf. So besteht allein die Lampenfassung aus fünf Einzelteilen, wozu noch das Lampengehäuse mit der wegen des zur Steckdose herzustellenden Massekontaktes erforderlichen Schleifkontaktfahne und der Leuchtring selbst hinzukommen.

Es ist deshalb Aufgabe der Erfindung, unter Vermeidung vorgenannter Nachteile die Beleuchtungs- und Spannvorrichtung eines elektrischen Zigarrenanzünders der im Oberbegriff des Anspruchs 1 genannten Art derart montagegerecht auszubilden, daß eine zeit- und kostengünstige Montageautomatisierung unter Zuhilfenahme von Industrierobotern erreichbar ist.

Diese Aufgabe wird durch die im Anspruch 1 näher gekennzeichneten Merkmale gelöst.

Weitere Ausgestaltungen der Erfindung sind in den Unteransprüchen näher gekennzeichnet.

Dadurch, daß die die Lampe tragende Spannhülse becherförmig ausgebildet ist und damit die Steckdose weitgehend formschlüssig aufnimmt, ist eine endmontagefreundliche Produktgestaltung erreicht. Wegen der gegenüber dem Stand der Technik nicht mehr vorhandenen exzentrischen Lampenanordnung läßt sich nunmehr die Steckdose zulieferwerkseitig in der Spannhülse vormontieren. Die gemeinsam vormontierte Spannhülse nebst Steckdose läßt sich von einem Industrieroboter mit Hilfe einer linearen Fügebewegung in die Armaturenbrettöffnung eines Kraftfahrzeugs einführen. Aufgrund des zentralen Durchgriffs aller am Becherboden der Steckdose angeordneten Kontaktteile durch den Becherboden der Spannhülse ist ein Zentralanschluß gewährleistet, welcher weitere Montagevorteile bietet. So läßt sich mit Hilfe einer einzigen geradlinigen Einführfügebewegung auch bereits der Bordnetz-Anschlußstecker kontaktieren. Ein nachträgliches Aufstecken des Anschlußsteckers entfällt somit. Dadurch, daß die Lampenaufnahme für die Lampe im zwischen Becherwandung und Anschlußstecker vorgesehenen Becherboden augebildet ist, wird die im Stand der Technik als nachteilig erkannte Exzentrizität der Lampenanordnung vermieden. Weil das Licht nunmehr im wesentlichen zentral achsennah im Raumbereich des Becherbodens der Spannhülse erzeugt wird und ins kompakte Material des Becherbodens einflutet, wird nach Fortleitung des Lichtes über die Mantelfläche der Becherwandung eine äußerst homogene Lichtverteilung im frontseitig angeordneten Leuchtring erzeugt, wohingegen bei der im Stand der Technik bekannten Anordnung der Lampe das Licht lateral in das Material einflutet, wodurch sich unerwünschte Helligkeitsgradienten entlang des Leuchtrings einstellen.

Da die erfindungsgemäße Spannhülse mit der Steckdose vormontiert werden kann, ist es erforderlich, die Verrastung der Spannhülse im Armaturenbrett unabhängig von dem im Stand der Technik offenbarten getrennten Einfügen der Steckdose auszubilden. Nach einer bevorzugten Ausführungsform sind deshalb auf der Oberfläche der vorzugsweise hohlzylinderförmigen Becherwandung der Spannhülse mehrere Gruppen unterschiedlich langer Klemmrippen rotationssymmetrisch angeordnet. Hierdurch läßt sich bei peripher gleichbleibenden Haltekräften in einfacher Weise eine sichere Verrastung der Spannhülse auch bei unterschiedlich dicken Armaturenbrettern mit einer einzigen Fügebewegung erreichen.

In vorteilhafter Weiterbildung der Erfindung ist außerdem vorgesehen, daß der Becherboden konusförmig in Form eines Kegelstumpfes angeschrägt ist. Hierdurch toleriert der Montageroboter kleine Ausrichtungsabweichungen bei der Teileaufnahme, so daß stets eine nichtklemmende Einfügung der Spannhülse gewährleistet ist.

Herkömmlicherweise können die Kontaktteile auch als Kontaktfahnen ausgestaltet sein, wodurch in Verbindung mit einer T-förmigen oder I-förmigen Anordnung der Kontaktteile auch bereits eine für die azimutale Ausrichtung der Spannhülse gewünschte Codierung der Kontaktteile gegeben ist.

In besonders vorteilhafter Weiterbildung ist es zweckmäßig, die den Becherboden durchgreifenden Kontaktteile in Form eines Koaxialanschlusses anzuordnen. Hierbei können in den hohlzylinderförmigen, koaxial angeordneten Ringkontakten streifenförmige Lichtdurchtrittsschlitze vorgesehen werden, damit das Licht einer vorzugsweise zentral axial im Becherboden angeordneten Lampe in das Material der Becherwandung hineinfluten kann. Der Koaxialanschluß kann aber auch anschlußsteckerseitig außen auf dem Boden der Spannhülse angeordnet werden, wodurch dann keine Lichtdurchtrittsschlitze erforderlich sind. Bei dieser besonders bevorzugten Ausführungsform ist somit neben der rotationssymmetrischen Ausbildung der Spannhülse an sich zusätzlich noch eine rotationssymmetrische Anordnung der Kontaktteile und der Lampe geschaffen, wodurch eine völlig richtungsunabhängige automatische Montage ermöglicht ist.

Nach einer weiteren Ausführungsform kann die Lampenaufnahme exzentrisch oder zentrisch axial im Becherboden ausgebildet und anschlußsteckerseitig offen ausgeformt sein. Hierdurch wird ermöglicht, daß die Lampe selbst im Anschlußstecker installiert werden kann, während der Ort größter Leuchtdichte innerhalb des Becherbodens gegeben ist.

In einer weiteren vorteilhaften Ausführungsform ist vorgesehen, daß die Lampenaufnahme in der Wandung des Becherbodens radial ausgerichtet ist und hierbei einen zentrisch angeordneten und als Kontaktfahne ausgebildeten Kontaktteil in einer in ihm vorgesehenen Durchbohrung durchstößt. Hierdurch werden die Vorteile einer zentralen Anordnung der Kontaktteile mit dem Vorteil einer zentrischen Anordnung der Lampe miteinander verbunden. Außerdem entfällt die im Stand der Technik noch erforderliche, die Masseverbindung herstellende Schleifkontaktfahne am Lampengehäuse, da die Lampenanschlußdrähte bei dieser Anordnung direkt an den entsprechenden Kontaktteilen angelötet werden können.

Die nach einem besonders bevorzugten Ausführungsbeispiel der montagegerechten Verrastung der Spannhülse dienende Ausformung der Klemmrippen ist vorzugsweise äquidistant und achsenparallel ausgerichtet. Hierdurch ist eine rotationssymmetrische Verteilung der Verrastungskräfte gewährleistet. In weiterer Ausbildung weisen die einzelnen Klemmrippen Anlaufschrägen auf, wodurch ein leichtes Einfügen der Spannhülse in ein vorzugsweise thermoplastisches Armaturenbrett ermöglicht ist.

Nach einer weiteren Ausbildung der Erfindung sind die Querschnittsprofile der Klemmrippen in vorteilhafter Weise elastisch ausgebildet, so daß die Klemmrippen während des Aufschiebens zunächst einfedern und hinter dem aufgeschobenen Armaturenbrett wieder auffedern. Hierzu können unter den Klemmrippen 20 vorzugsweise Hohlräume 16 vorhanden sein, um eine Federwirkung der Klemmrippen 20 zu ermöglichen. Auf diese Weise ist eine nahezu rüttel- und verdrehsichere Montage der erfindungsgemäßen Spannhülse im Armaturenbrett gewährleistet.

Die Erfindung soll nachstehend anhand mehrerer Ausführungsbeispiele sowie der schematischen Zeichnung näher beschrieben und erläutert werden.

Es zeigen
- Fig. 1: eine Schnittansicht der im Armaturenbrett 18 eines Kraftfahrzeugs montierten erfindungsgemäßen Spannhülse 1 nebst Steckdose 2 eines elektrischen Zigarrenanzünders mit zwei Detailansichten,
- Fig. 2: eine Seitenschnittansicht der erfindungsgemäßen Spannhülse 1 nach einem ersten Ausführungsbeispiel.
- Fig. 3: eine Seitenansicht (teilweise geschnitten) der erfindungsgemäßen Spannhülse 1 nach dem ersten Ausführungsbeispiel,
- Fig. 4: eine Aufsicht auf die Anordnung der Kontaktteile 5,6,7 des ersten Ausführungsbeispiels,
- Fig. 5: eine Seitenansicht auf die Klemmrippen 20 aufweisende Becherwandung 3 der erfindungsgemäßen Spannhülse 1 nach dem ersten Ausführungsbeispiel,
- Fig. 6: einen Querschnitt durch die Spannhülse 1 nach der Schnittlinie VI-VI in Fig. 5,
- Fig. 7: eine Seitenschnittansicht der erfindungsgemäßen Spannhülse 1 gemäß einem zweiten Ausführungsbeispiel, bei welchem die den Anschlußstecker 8 kontaktierenden Kontaktteile 5,7 als Koaxialanschluß ausgebildet sind,
- Fig. 8: eine Aufsicht auf die Anordnung der Kontaktteile 5,7 gemäß dem zweiten Ausführungsbeispiel in Figur 7,
- Fig. 9: eine Seitenschnittansicht der erfindungsgemäßen Spannhülse 1 nach einem dritten Ausführungsbeispiel,
- Fig. 10: verschiedene Querschnittsprofile 26 der Klemmrippen 20.

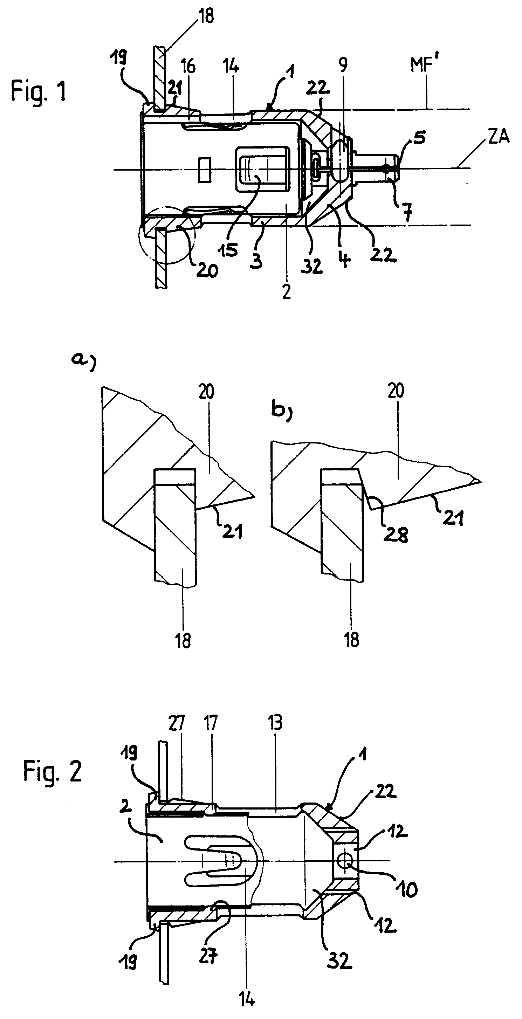

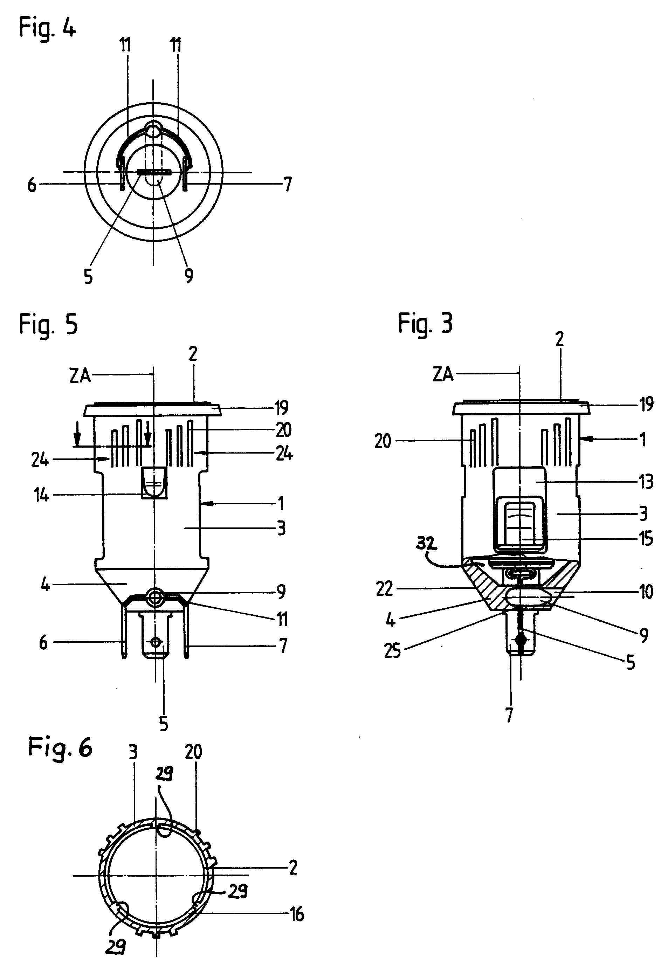

Fig. 1 zeigt einen Medianschnitt eines ersten Ausführungsbeispiels der erfindungsgemäßen Spannhülse 1 nebst der von ihr weitgehend formschlüssig umfaßten Steckdose 2. Die Spannhülse 1 weist eine Becherwandung 3 auf mit einem materialeinheitlich aus lichtleitendem Material angeformten Becherboden 4. Die Becherwandung 3 ist in Form eines geraden Hohlzylinders ausgebildet, wohingegen der Becherboden 4 im wesentlichen vollzylinderförmig ausgebildet ist, wobei der Becherboden 4 mittels einer Anschrägung 22 kegelstumpfförmig angeschrägt ist und wobei Becherwandung 3 und Becherboden 4 eine Kreisquerschnittsfläche aufweisen. Jedoch sind auch andere, z.B. elliptische Querschnittsflächen denkbar. Auf dem Boden der einen Haltekörper nebst Glühkopf (nicht abgebildet) aufnehmenden, ebenfalls becherförmig ausgebildeten Steckdose 2 ist ein erstes Pluspotentialkontaktteil 5 und ein Minuspotentialkontaktteil 7 angeordnet. Hierfür weist der Becherboden 4 eine ebenfalls kegelstumpfförmig ausgebildete Aufnahme 32 auf. Ein zweites Pluspotentialkontaktteil 6 (Fig.4,5) ist im Becherboden 4 der Spannhülse 1 ohne Durchgriff des Becherbodens 4 verrastet. Die Kontaktteile 5,7 durchgreifen im Becherboden 4 ausgeformte Ausnehmungen 12 (Fig.2). Sämtliche Kontaktteile 5,6,7 sind innerhalb eines von einer fiktiven Hohlzylindermantelfläche MF′ eines fiktiven Hohlzylinders umgrenzten Raumbereichs angeordnet. Hierbei schließt die fiktive Hohlzylindermantelfläche MF' in Steckdoseneinsteckrichtung an die Becherwandung 3 an, wobei der Außendurchmesser des fiktiven Hohlzylinders dem Außendurchmesser der Spannhülse 1 entspricht. Entlang einer Zentralachse ZA verläuft die Fügebewegung eines Montageroboters. Die Spannhülse 1 ist mit Hilfe von Klemmrippen 20, welche Anlaufschrägen 21 aufweisen, sicher hinter einem Armaturenbrett 18 verrastet. Die herausvergrößerte Detailansicht b) zeigt eine Variante der Klemmrippen 20 mit einer zusätzlichen Ablaufschräge 28. Eine hiermit korrespondierende Anschrägung am Armaturenbrett 18 unterstützt zusätzlich den Aufrastvorgang der Spannhülse 1.

Die Fig. 2,3 zeigen weitere Seiten(schnitt)ansichten der erfindungsgemäßen Spannhülse 1 nach dem ersten Ausführungsbeispiel. In der Mantelfläche der Becherwandung 3 befinden sich erste Durchbrüche 13 für die im Betriebsfall auffedernden Bimetallfedern 15 der Steckdose 2. Der Beleuchtungs-Spannbecherhülse 1 inwändig angeformte Rastnasen 27 sind für deren Verrastung in der Steckdose 2 vorgesehen. Eine Lampenaufnahme 10 ist radial im Becherboden 4 eingeformt und lateral offen. Eine Lampe 9, vorzugsweise eine long-life-Lampe mit 10⁴ Stunden Brenndauer, kann hier eingefügt werden und mit Lampenanschlußdrähten 11 am zweiten Pluspotentialkontaktteil 6 sowie am Minuspotentialkontaktteil 7 leitend angeschlossen werden. Der Becherboden 4 weist eine kegelstumpfförmige Anschrägung 22 auf, welche das Einfügen der Spannhülse in das Armaturenbrett 18 erleichtert.

Fig. 4 zeigt eine Aufsicht auf die Anordnung der Kontaktteile 5,6,7 des ersten Ausführungsbeispiels. Die Kontaktteile 6,7 sind über Lampenanschlußdrähte 11 mit der Lampe 9 verbunden. Das Minuspotentialkontaktteil 7 kontaktiert die Becherwandung der metallenen Steckdose 2, wohingegen über das erste Pluspotentialkontaktteil 5 Potential an die gegenüber der Steckdose 2 isoliert angeordneten Bimetallfedern 15 gelegt wird.

Fig. 5 zeigt die Ausbildung der auf der Oberfläche der Becherwandung 3 ausgeformten Klemmrippen 20. Die Klemmrippen 20 sind in rotationssymmetrisch angeordneten Gruppen 24 von Klemmrippen 20 angeordnet. Jede Gruppe 24 weist unterschiedlich lange Klemmrippen 20 auf, wobei der Abstand des Endes einer Klemmrippe 20 zu einem an der Becherwandung 3 angeformten Leuchtring 19 mit der Wandstärke der Armaturenbretter 18 korrespondiert. Die Klemmrippen 20 können ein rechtwinkliges oder ein angeschrägtes Ende aufweisen, wie die Detailansichten zu Figur 1 zeigen. Anstelle der Klemmrippen 20 können auch eine oder mehrere Stahlfedern 17 hinter dem Armaturenbrett 18 ausfedern und die Becherwandung 3 verrasten, wie insbesondere Figur 2 zeigt. Selbstverständlich können auch alle einschlägig bekannten, hinsichtlich der sicheren Verrastung der Spannhülse 1 gleichwirkenden Befestigungsmittel (Gewinde, Kleber u.s.w.) vorgesehen werden.

Fig. 6 zeigt einen Querschnitt durch die Spannhülse 1 nach der Schnittlinie VI-VI in Fig. 5. Zwischen der Steckdose 2 und der Becherwandung 3 sind Abstandsstege 29 und Hohlräume 16 vorgesehen, um eine Federwirkung der Klemmrippen 20 zu ermöglichen.

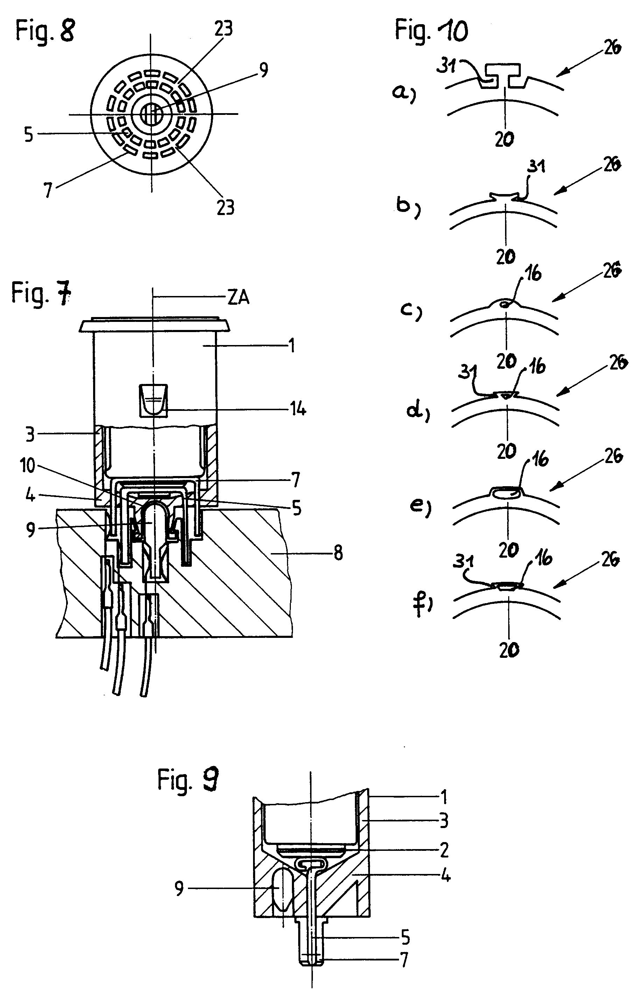

Fig. 7 zeigt die Seitenschnittansicht der erfindungsgemäßen Spannhülse 1 gemäß einem zweiten Ausführungsbeispiel, bei welchem die den Anschlußstecker 8 kontaktierenden Kontaktteile 5,7 als Koaxialanschluß ausgebildet sind. Bei Bedarf können weitere Kontaktteile koaxial angeordnet werden. Axial zentriert ist die Lampenaufnahme 10 für die Lampe 9 vorgesehen. Hierbei ist die Lampe 9 im Anschlußstecker 8 installiert, während der Ort größter Leuchtdichte im Zentrum des Becherbodens 4 liegt. Hierzu ist dem Becherboden 4 ein Ansatz 30 angeformt, der eine Schwalbenschwanzverrastung mit dem Material des Anschlußsteckers 8 bildet. Um eine Lichteinflutung in die Becherwandung 3 zu ermöglichen, müssen bei diesem Ausführungsbeispiel die als hohlzylinderförmige Ringkontakte ausgebildeten Kontaktteile 5,7 streifenförmige Lichtdurchtrittsschlitze 23 aufweisen, wie Fig. 8 zeigt.

Fig. 8 zeigt eine Aufsicht auf die koaxiale Anordnung der mit den Lichtdurchtrittsschlitzen 23 versehenen Kontaktteile 5,7 gemäß dem zweiten Ausführungsbeispiel in Figur 7.

Fig. 9 zeigt eine Seitenschnittansicht der erfindungsgemäßen Spannhülse 1 nach einem dritten Ausführungsbeispiel. Hierbei ist die Lampe 9 exzentrisch axial im Becherboden 4 angeordnet.

Fig. 10 a) bis f) zeigen verschiedene Querschnittsprofile 26 von Klemmrippen 20, die beim Aufschieben des Armaturenbretts 18 einfedern und hinter dem vollständig aufgeschobenen Armaturenbrett 18 auffedernd verrasten, wozu teilweise Hohlräume 16 und/oder Hinterschneidungen 31 vorgesehen sind.

### Bezugszeichenliste

- 1: Spannhülse
- 2: Steckdose
- 3: Becherwandung
- 4: Becherboden
- 5: 1. Pluspotentialkontaktteil
- 6: 2. Pluspotentialkontaktteil
- 7: Minuspotentialkontaktteil
- 8: Anschlußstecker
- 9: Lampe
- 10: Lampenaufnahme
- 11: Lampenanschlußdrähte
- 12: Kontaktteilausnehmungen
- 13: 1. Durchbrüche in 3
- 14: 2. Durchbrüche in 3
- 15: Bimetallfedern von 2
- 16: Hohlräume
- 17: Stahlfedern
- 18: Armaturenbrett
- 19: Leuchtring
- 20: Klemmrippen
- 21: Anlaufschrägen von 20
- 22: Anschrägung von 4
- 23: Lichtdurchtrittsschlitze
- 24: Gruppen von 20
- 25: Duchbohrung von 5
- 26: Querschnittsprofile von 20
- 27: Rastnasen
- 28: Ablaufschräge
- 29: Abstandsstege an 3
- 30: Ansatz von 4
- 31: Hinterschneidungen
- 32: Aufnahme
- MF': fiktive Hohlzylindermantelfläche
- ZA: Zentralachse

## Patentansprüche

1. Elektrischer, insbesondere im Armaturenbrett eines Kraftfahrzeugs zu installierender Zigarrenanzünder, dessen jeweils mindestens ein Pluspotentialkontaktteil und ein Minuspotentialkontaktteil aufweisende Kontaktteile einen hinter der Frontseite des Armaturenbretts angeordneten Anschlußstecker kontaktieren, mit einer einen Haltekörper nebst Glühkopf aufnehmenden Steckdose sowie einer zwischen Steckdose und Armaturenbrett angeordneten lichtleitenden Spannhülse, wobei die Spannhülse vorderfrontseitig einen Leuchtring und rückfrontseitig eine Lampe aufweist sowie zur Aufnahme der Steckdose ausgebildet ist, dadurch gekennzeichnet,
- daß die Spannhülse (1) becherförmig mit einer Becherwandung (3) und einem Becherboden (4) ausgebildet ist,
- daß alle anschlußsteckerseitig zugeordneten Kontaktteile (5,6,7) innerhalb eines Raumbereichs angeordnet sind, der von einer an die Becherwandung (3) fiktiv anschließenden Mantelfläche (MF′) eines in Steckdoseneinsteckrichtung fiktiv verlängerten Hohlzylinders umgrenzt ist, wobei dessen Außendurchmesser dem Außendurchmesser der Spannhülse (1) entspricht,
- und daß eine Lampenaufnahme (10) für die Lampe (9) im Becherboden (4) vorgesehen ist.

2. Elektrischer Zigarrenanzünder nach Anspruch 1, dadurch gekennzeichnet, daß die Becherwandung (3) hohlzylinderförmig und der Becherboden (4) vollzylinderförmig ausgebildet ist.

3. Elektrischer Zigarrenanzünder nach Anspruch 1 oder 2, dadurch gekennzeichnet, daß der Becherboden (4) mittels einer Anschrägung (22) kegelstumpfförmig angeschrägt ist.

4. Elektrischer Zigarrenanzünder nach einem der Ansprüche 1 bis 3, dadurch gekennzeichnet, daß das erste Pluspotentialkontaktteil (5) den Becherboden (4) zentrisch oder exzentrisch durchstößt und daß das Minuspotentialkontaktteil (7) den Becherboden (4) exzentrisch durchstößt oder vice versa.

5. Elektrischer Zigarrenanzünder nach Anspruch 4, dadurch gekennzeichnet, daß die Kontaktteile (5,7) als Kontaktfahnen ausgebildet sind und T-förmig einander zugeordnet sind.

6. Elektrischer Zigarrenanzünder nach einem der vorhergehenden Ansprüche, dadurch gekennzeichnet, daß ein zweites Pluspotentialkontaktteil (6) den Becherboden (4) exzentrisch durchstößt oder im Becherboden (4) verrastet angeordnet ist.

7. Elektrischer Zigarrenanzünder nach Anspruch 6, dadurch gekennzeichnet, daß die Kontaktteile (5,6,7) I-förmig einander zugeordnet sind.

8. Elektrischer Zigarrenanzünder nach einem der Ansprüche 4 oder 6, dadurch gekennzeichnet, daß die Kontaktteile (5,6,7) in Form eines Koaxialanschlusses angeordnet sind.

9. Elektrischer Zigarrenanzünder nach Anspruch 8, dadurch gekennzeichnet, daß die Kontaktteile (5,6,7) als Lichtdurchtrittsschlitze (23) aufweisende hohlzylinderförmige Ringkontakte ausgebildet sind.

10. Elektrischer Zigarrenanzünder nach einem der vorhergehenden Ansprüche, dadurch gekennzeichnet, daß die Lampenaufnahme (10) exzentrisch oder zentrisch axial und anschlußsteckerseitig offen ausgeformt ist.

11. Elektrischer Zigarrenanzünder nach einem der vorhergehenden Ansprüche, dadurch gekennzeichnet, daß die Lampenaufnahme (10) in der Wandung des Becherbodens (4) radial ausgerichtet ist, und daß das als Kontaktfahne ausgebildete, den Becherboden (4) zentrisch durchstoßende erste Pluspotentialkontaktteil (5) eine dem Durchmesser der Lampe (9) entsprechende Durchbohrung (25) aufweist.

12. Elektrischer Zigarrenanzünder nach einem der vorhergehenden Ansprüche, dadurch gekennzeichnet, daß die Lampenanschlußdrähte (11) einerseits mit dem Minuspotentialkontaktteil (7) und andererseits entweder mit dem ersten Pluspotentialkontaktteil (5) oder mit dem zweiten Pluspotentialkontaktteil (6) leitend verbunden sind.

13. Elektrischer Zigarrenanzünder nach einem der vorhergehenden Ansprüche, dadurch gekennzeichnet, daß auf der dem Armaturenbrett (18) zugewandten Außenfläche der Becherwandung (3) Befestigungsmittel, insbesondere Rast- oder Klemm-Mittel vorgesehen sind.

14. Elektrischer Zigarrenanzünder nach einem der vorhergehenden Ansprüche, dadurch gekennzeichnet, daß die Außenfläche der Becherwandung (3) mit Klemmrippen (20) versehen ist.

15. Elektrischer Zigarrenanzünder nach einem der vorhergehenden Ansprüche, dadurch gekennzeichnet, daß die einzelnen Klemmrippen (20) Anlaufschrägen (21) und/oder Ablaufschrägen (28) aufweisen.

16. Elektrischer Zigarrenanzünder nach einem der vorhergehenden Ansprüche, dadurch gekennzeichnet, daß Querschnittsprofile (26) der Klemmrippen (20) in der Weise elastisch ausgebildet sind, daß die mit einer jeweiligen Armaturenbrettdicke korrespondierenden Klemmrippen (20) während des Aufschiebens des Armaturenbretts (18) zunächst einfedern und hinter dem aufgeschobenen Armaturenbrett (18) verrastend auffedern.

17. Elektrischer Zigarrenanzünder nach einem der vorhergehenden Ansprüche, dadurch gekennzeichnet, daß die Klemmrippen (20) äquidistant und achsenparallel ausgerichtet sind.

18. Elektrischer Zigarrenanzünder nach einem der vorhergehenden Ansprüche, dadurch gekennzeichnet, daß zwischen der Steckdose (2) und der Becherwandung (3), Abstandsstege (29) und Hohlräume (16) vorgesehen sind, um eine Federwirkung der Klemmrippen (20) zu ermöglichen.

19. Elektrischer Zigarrenanzünder nach einem der vorhergehenden Ansprüche, dadurch gekennzeichnet, daß anstatt der Klemmrippen (20) eine oder mehrere Stahlfedern (17) hinter dem Armaturenbrett ausfedern und so die Becherhülse (3) verrasten.

20. Elektrischer Zigarrenanzünder nach einem der vorhergehenden Ansprüche, dadurch gekennzeichnet, daß die Klemmrippen (20) in rotationssymmetrisch angeordneten Gruppen (24) jeweils verschieden langer Klemmrippen (20) angeordnet oder materialeinheitlich angeformt sind, wobei der Abstand der untereinander gleich langen Klemmrippen (20) aus jeder Gruppe (24) zur Rückfront des Leuchtrings (19) jeweils vorhandenen Wandstärken unterschiedlicher Armaturenbretter (18) entspricht.

## Claims

1. Electric cigar lighter which is to be installed more especially in the dashboard of a motor vehicle, the contact members of such lighter each comprising at least one positive potential contact member and one negative potential contact member and making contact with a connecting member disposed behind the front surface of the dashboard, the lighter having a socket which accommodates a retaining body together with an incandescent head, and a light-conducting clamping sleeve disposed between the socket and dashboard, the clamping sleeve having a light-transmitting ring at its front end and a lamp at its rear end and being adapted to accommodate the socket, characterised
- in that the clamping sleeve (1) has a cup-shaped configuration with a cup wall (3) and a cup base (4);
- in that all of the contact members (5, 6, 7), which are associated with one another at the connecting member end are disposed inwardly of an area which is defined by an imaginary surface (MF') of an imaginary hollow cylinder extending in the direction of insertion of the socket, said surface communicating with the cup wall (3), the external diameter of said hollow cylinder corresponding to the external diameter of the clamping sleeve (1);
- and in that a lamp holder (10) is provided for the lamp (9) in the cup base (4).

2. Electric cigar lighter according to claim 1, characterised in that the cup wall (3) has a hollow-cylindrical configuration, and the cup base (4) has a solid-cylindrical configuration.

3. Electric cigar lighter according to claim 1 or 2, characterised in that the cup base (4) is inclined in a frustoconical manner by means of an inclined portion (22).

4. Electric cigar lighter according to one of claims 1 to 3, characterised in that the first positive potential contact member (5) intersects the cup base (4) centrally or eccentrically, and in that the negative potential contact member (7) intersects the cup base (4) eccentrically, or vice versa.

5. Electric cigar lighter according to claim 4, characterised in that the contact members (5, 7) are contact lugs and are associated with one another in a T-shaped manner.

6. Electric cigar lighter according to one of the preceding claims, characterised in that a second positive potential contact member (6) intersects the cup base (4) eccentrically or is located in the cup base (4).

7. Electric cigar lighter according to claim 6, characterised in that the contact members (5, 6, 7) are associated with one another in an I-shaped manner.

8. Electric cigar lighter according to one of claims 4 or 6, characterised in that the contact members (5, 6, 7) are provided in the form of a coaxial connection.

9. Electric cigar lighter according to claim 8, characterised in that the contact members (5, 6, 7) are hollow-cylindrical annular contacts having slots (23) which permit light to pass therethrough.

10. Electric cigar lighter according to one of the preceding claims, characterised in that the lamp holder (10) is shaped eccentrically or centrally axially and is open at the connecting member end.

11. Electric cigar lighter according to one of the preceding claims, characterised in that the lamp holder (10) is radially orientated in the wall of the cup base (4), and in that the first positive potential contact member (5), which is a contact lug and intersects the cup base (4) centrally, has a through-bore (25) corresponding to the diameter of the lamp (9).

12. Electric cigar lighter according to one of the preceding claims, characterised in that the lamp connecting wires (11) are conductively connected, on the one hand, to the negative potential contact member (7) and, on the other hand, either to the first positive potential contact member (5) or to the second positive potential contact member (6).

13. Electric cigar lighter according to one of the preceding claims, characterised in that securing means, more especially locking or clamping means, are provided on the external surface of the cup wall (3) facing the dashboard (18).

14. Electric cigar lighter according to one of the preceding claims, characterised in that the external surface of the cup wall (3) is provided with clamping ribs (20).

15. Electric cigar lighter according to one of the preceding claims, characterised in that the individual clamping ribs (20) have upward inclines (21) and/or downward inclines (28).

16. Electric cigar lighter according to one of the preceding claims, characterised in that cross-sectional profiles (26) of the clamping ribs (20) are so resilient that the clamping ribs (20), corresponding to a particular dashboard thickness, spring inwardly initially while the dashboard (18) is being slipped thereover and spring upwardly so as to lock behind the slipped-over dashboard (18).

17. Electric cigar lighter according to one of the preceding claims, characterised in that the clamping ribs (20) are orientated in an equidistant and axis-parallel manner.

18. Electric cigar lighter according to one of the preceding claims, characterised in that spacer webs (29) and cavities (16) are provided between the socket (2) and the cup wall (3) in order to permit a spring action of the clamping ribs (20).

19. Electric cigar lighter according to one of the preceding claims, characterised in that, instead of the clamping ribs (20), one or a plurality of steel springs (17) spring outwardly behind the dashboard and thus lock the cup sleeve (3).

20. Electric cigar lighter according to one of the preceding claims, characterised in that the clamping ribs (20) are disposed in rotationally symmetrically arranged groups (24) of clamping ribs (20) having varying lengths or are integrally moulded, the spacing between the clamping ribs (20) with the same length from each group (24) and the rear end of the light-transmitting ring (19) corresponding to the particular wall thicknesses of different dashboards (18).

## Revendications

1. Allume-cigare électrique, destiné en particulier à être installé dans le tableau de bord d'un véhicule automobile, et dont les pièces de contact présentant à chaque fois au moins une pièce de contact d'un potentiel positif (+) et une pièce de contact à potentiel négatif (-) viennent au contact d'une fiche de raccordement disposée derrière le côté avant du tableau de bord, l'allume-cigare comportant une prise femelle logeant un corps de retenue au voisinage d'une tête incandescente et comportant une douille de serrage conductrice de lumière, disposée entre la prise femelle et le tableau de bord, la douille de serrage présentant un anneau lumineux du côté avant et une lampe du côté arrière et étant configurée de manière à recevoir et loger la prise femelle, allume-cigare caractérisé en ce que :
- la douille (1) de serrage a une forme de coupe comportant une paroi (3) de coupe et un fond (4) de coupe,
- toutes les pièces de contact (5, 6, 7) disposées du côté des fiches de raccordement sont placées à l'intérieur d'un volume limité par la surface d'enveloppe (MF'), entourant fictivement la paroi (3) de la coupe, d'un cylindre creux prolongé fictivement dans la direction d'insertion des prises femelles, leur diamètre extérieur correspondant au diamètre extérieur de la douille de serrage (1),
- et en ce qu'il est prévu un logement (10) pour la lampe (9) dans le fond (4) de la coupe;

2. Allume-cigare électrique selon la revendication 1, caractérisé en ce que la paroi (3) de la coupe a une forme de cylindre creux, et en ce que le fond (4) de la coupe a la forme d'un cylindre plein ou massif.

3. Allume-cigare électrique selon la revendication 1 ou 2, caractérisé en ce que le fond (3) de la coupe comporte une partie inclinée (22) qui lui donne une forme tronconique.

4. Allume-cigare électrique selon l'une des revendications 1 à 3, caractérisé en ce que la première pièce de contact (5) à potentiel positif (+) traverse le fond (4) de la coupe en étant en une position centrale ou excentrée et en ce que la pièce de contact (7) à potentiel négatif (-) traverse le fond (4) de la coupe en étant en position excentrée ou inversement.

5. Allume-cigare électrique selon la revendication 4, caractérisé en ce que les pièces de contact (5, 7) ont la configuration de lamelles de contact et sont mutuellement associées en étant en forme de T.

6. Allume-cigare électrique selon l'une des revendications précédentes, caractérisé en ce qu'une seconde pièce de contact (6) à potentiel positif (+) fait saillie, en position excentrée, du fond (4) de la coupe ou est disposée dans le fond (4) de la coupe en y étant encliquetée.

7. Allume-cigare électrique, caractérisé en ce que les pièces de contact (5, 6, 7) sont mutuellement associées en étant en forme de I.

8. Allume-cigare électrique selon l'une des revendications 4 ou 6, caractérisé en ce que les pièces de contact (5, 6, 7) sont disposées en forme de connexions coaxiales.

9. Allume-cigare électrique selon la revendication 8, caractérisé en ce que les pièces de contact (5, 6, 7) sont conformées en des contacts annulaires en forme de cylindres creux présentant des fentes (23) permettant le passage de la lumière.

10. Allume-cigare électrique selon l'une des revendications précédentes, caractérisé en ce que le logement (10) de la lampe est réalisé en position excentrée ou axiale centrée et est ouvert du côté des fiches de raccordement.

11. Allume-cigare électrique selon l'une des revendications précédentes, caractérisé en ce que le logement (10) de la lampe est formé en direction radiale dans la paroi du fond (4) de la coupe et en ce que la première pièce de contact (5) à potentiel positif (+) en forme de lamelles de contact traversant centralement le fond (4) de la coupelle présente un trou traversant (25) correspondant au diamètre de la lampe (9).

12. Allume-cigare électrique selon l'une des revendications précédentes, caractérisé en ce que les fils (11) de connexion de la lampe sont reliés, de manière à assurer une conduction électrique, avec la pièce de contact (7) à potentiel négatif (-) d'une part, et d'autre part avec la première pièce de contact (5) à potentiel positif (+) ou avec la seconde pièce de contact (6) à potentiel positif (+).

13. Allume-cigare électrique selon l'une des revendications précédentes, caractérisé en ce que des éléments de fixation, en particulier des éléments d'encliquetage ou de serrage, sont prévus sur la surface extérieure de la paroi (3) de coupe tournée vers le tableau de bord (18).

14. Allume-cigare électrique selon l'une des revendications précédentes, caractérisé en ce que la surface extérieure de la paroi (3) de la coupe comporte des nervures (20) de serrage.

15. Allume-cigare électrique selon l'une des revendications précédentes, caractérisé en ce que les diverses nervures (20) de serrage présentent des rampes inclinées (21) d'entrée et/ou des rampes inclinées (28) de sortie.

16. Allume-cigare électrique selon l'une des revendications précédentes, caractérisé en ce que les profils transversaux (26) des nervures (20) de serrage sont réalisés élastiques, de manière que les nervures de serrage (20) correspondant à une épaisseur donnée de tableau de bord s'insèrent tout d'abord élastiquement par la poussée d'insertion du tableau de bord et serrent ensuite élastiquement, par encliquetage derrière le tableau de bord (18), inséré entièrement.

17. Allume-cigare électrique selon l'une des revendications précédentes, caractérisé en ce que les nervures (20) de serrage sont équidistantes et à axes parallèles.

18. Allume-cigare électrique selon l'une des revendications précédentes, caractérisé en ce qu'entre la fiche de prise femelle (2) et la paroi (3) de coupe sont prévues des saillies (29) d'entretoisement et des espaces creux (16) pour permettre un effet de ressort élastique des nervures (20) de serrage.

19. Allume-cigare électrique selon l'une des revendications précédentes, caractérisé en ce qu'au lieu des nervures (20) de serrage un ou plusieurs ressorts (17) en acier font élastiquement saillie derrière le tableau de bord et fixent ainsi par encliquetage la douille (3) en forme de coupe.

20. Allume-cigare électrique selon l'une des revendications précédentes, caractérisé en ce que les nervures (20) de serrage sont disposées en des groupes (24) placés en symétrie de rotation et comportant chacun des nervures (20) de serrage de longueur différente ou constituent un ensemble monobloc formé en une seule matière, la distance entre les nervures (20) de serrage de même longueur faisant partie de chaque groupe (24) à la partie arrière de l'anneau lumineux (19) correspondant toujours aux épaisseurs de paroi, présentes à chaque fois, de différents tableaux de bord (18).
